# EUROPÄISCHE PATENTSCHRIFT

(11) **EP 1 171 260 B1**
(45) Veröffentlichungstag und Bekanntmachung des Hinweises auf die Patenterteilung: **26.02.2003**
(21) Anmeldenummer: 00929394.5
(22) Anmeldetag: 19.04.2000
(51) Int. Cl.: B23D 31/00

(54) **VORRICHTUNG ZUM BRUCHTRENNEN EINES WERKSTÜCKS**
DEVICE FOR FRACTURE-SEPARATING A WORKPIECE
DISPOSITIF POUR LA DIVISION PAR RUPTURE D'UNE PIECE

(30) Priorität: 21.04.1999 DE 19918067
(43) Veröffentlichungstag der Anmeldung: 16.01.2002
(73) Patentinhaber: Alfing Kessler Sondermaschinen GmbH, 73433 Aalen (DE)
(72) Erfinder: HÄHNEL, Michael, D-73457 Essingen (DE); WISNIEWSKI, Horst, D-72762 Reutlingen (DE)
(74) Vertreter: HOFFMANN - EITLE
(86) Internationale Anmeldenummer: EP0003579
(87) Internationale Veröffentlichungsnummer: WO00062965

(56) Entgegenhaltungen:
- DE-A- 19 704 131
- US-A- 4 569 109

## Beschreibung

### TECHNISCHES GEBIET

Die Erfindung betrifft eine Vorrichtung zum Bruchtrennen eines Werkstücks gemäß dem Oberbegriff des Anspruchs 1.

### STAND DER TECHNIK

Aus der US-P-4,684,267 bzw. der EP 0 167 320 B1 ist eine Vorrichtung zum Bruchtrennen eines Werkstücks mit mehreren axial fluchtend hintereinander angeordneten ringartigen Werkstückabschnitten bekannt, wobei die Vorrichtung mit einer Spreizeinrichtung versehen ist, die in eine durch einen jeweiligen ringartigen Werkstückabschnitt gebildete Bohrung axial einführbar und an mindestens zwei in Axialrichtung voneinander beabstandeten Aufspreizbereichen aufspreizbar ist. Die Spreizeinrichtung besitzt einen Spreizdorn, der mit einer Vielzahl von bezogen auf die jeweilige Bohrung in einer radialen Richtung bewegbaren Spreizsegmenten ausgestattet ist, wobei jedes Spreizsegment einen Aufspreizbereich des Spreizdorns bildet. Alle Spreizsegmente sind über ein langgestrecktes Betätigungselement, das sich im Inneren des Spreizdorns in Axialrichtung erstreckt und mit einem außerhalb des Spreizdorns befindlichen Stellglied gekoppelt ist, gemeinsam zu betätigen. Das Betätigungselement besitzt eine Vielzahl von Keilelementen mit sich in Bezug auf die Axialrichtung winkelig erstreckenden ersten Keilflächen, die einer Vielzahl von jeweils an einem Innenabschnitt der Spreizsegmente geformten und sich in Bezug auf die Axialrichtung ebenfalls winkelig erstreckenden zweiten Keilflächen komplementär zugeordnet sind. Wird das Betätigungselement axial bewegt, so wirken die ersten und die zweiten Keilflächen zusammen, wodurch die Spreizsegmente ausgefahren und der Spreizdorn somit aufgespreizt wird. Mit dieser Spreizeinrichtung können alle ringartigen Werkstückabschnitte des Werkstückes gleichzeitig bruchgetrennt werden.

Vorrichtungen der zuvor beschriebenen Art besitzen jedoch einen Nachteil dahingehend, daß ihre Spreizeinrichtung auf eine einmal festgelegt Werkstückgeometrie, das heißt hier die Position der abzutrennenden ringartigen Werkstückabschnitte, festgelegt ist und nachträglich nicht oder nur mit erheblichem fertigungstechnischen Aufwand wieder geändert oder an ein andersartiges Werkstück angepaßt werden kann. Für ein anders gestaltetes Werkstück muß folglich auch eine andere Spreizeinrichtung verwendet werden, was mit nicht unerheblichen Kosten für die Herstellung dieser zusätzlichen Spreizeinrichtungen sowie ihrer Lagerhaltung und Wartung verbunden ist.

### DARSTELLUNG DER ERFINDUNG

Der Erfindung liegt das technische Problem zugrunde eine gattungsgemäße Vorrichtung zu schaffen, die auf möglichst einfache und effektive Art und Weise an Werkstücke mit unterschiedlichen Positionen der abzutrennenden ringartigen Werkstückabschnitte anpaßbar ist.

Das vorhergenannte technische Problem wird gelöst durch eine erfindungsgemäße Vorrichtung mit den Merkmalen des Anspruchs 1.

Diese Vorrichtung zum Bruchtrennen eines Werkstücks mit mehreren axial fluchtend hintereinander angeordneten ringartigen Werkstückabschnitten verfügt über mindestens eine Spreizeinrichtung, die in eine durch einen jeweiligen ringartigen Werkstückabschnitt gebildete Bohrung axial einführbar ist und mindestens ein Spreizelement aufweist, daß an mindestens zwei in Axialrichtung voneinander beabstandeten Aufspreizbereichen aufspreizbar ist, wobei die Spreizeinrichtung mit einer mit dem mindestens einen Spreizelement zusammenwirkenden integrierten Aufspreizkontrolleinrichtung zum Kontrollieren einer variablen Position und/oder einer variablen Aufspreizweite und/oder eines variablen Aufspreizzeitpunktes und/oder einer variablen Aufspreizreihenfolge der mindestens zwei Aufspreizbereiche versehen ist.

Als ein Werkstück mit mehreren axial fluchtend hintereinander angeordneten ringartigen Werkstückabschnitten ist im Sinne der Erfindung auch eine Werkstückanordnung zu verstehen, die mehrere aneinandergereihte einzelne Werkstücke mit jeweils nur einem einzigen ringartigen Werkstückabschnitt umfaßt. Des Weiteren auch eine Kombination aus dieser letztgenannten Werkstückanordnung und einem oder mehreren Werkstücken mit mehreren axial fluchtend hintereinander angeordneten ringartigen Werkstückabschnitten. Die integrierte Aufspreizkontrolleinrichtung ist vorzugsweise im wesentlichen rein mechanisch aufgebaut. Die Erfindung ist jedoch nicht ausschließlich auf diese Ausgestaltungsform fixiert. Die integrierte Aufspreizkontrolleinrichtung kann im Sinne der Erfindung ebenso auch hydraulische, pneumatische, elektromechanische, elektrische, elektronische und andere geeignete Komponenten sowie Mischformen daraus enthalten.

Bei der erfindungsgemäßen Vorrichtung ist die Spreizeinrichtung aufgrund ihrer integrierten Aufspreizkontrolleinrichtung auf einfache und effektive Art und Weise an Werkstücke mit einer unterschiedlichen Anzahl und/oder unterschiedlichen Positionen und/oder unterschiedlichen Ausgestaltung der abzutrennenden ringartigen Werkstückabschnitte anpaßbar. Entgegen dem bisher bekannten Stand der Technik ist es bei der erfindungsgemäßen Vorrichtung daher für eine große Anzahl von Werkstückvarianten nicht erforderlich, eine separate Spreizeinrichtung herzustellen. Auch die Notwendigkeit einer entsprechenden Lagerhaltung und/oder Wartung entfällt. Die für die Anpassung an ein andersartig gestaltetes Werkstück erforderlichen Schritte sind bei der erfindungsgemäßen Vorrichtung infolge der integrierten Aufspreizkontrolleinrichtung leicht und mit einfachen Mittel durchführbar. Die Herstellungs- und Betriebskosten einer erfindungsgemäßen Vorrichtung können demzufolge gegenüber konventionellen Vorrichtung gesenkt werden. Auch läßt sich mit der erfindungsgemäßen Vorrichtung eine flexiblere Fertigung realisieren, was insbesondere bei kleineren Werkstückserien von großem Vorteil ist. Es ist jedoch auch noch besonders hervorzuheben, daß mittels der integrierten Aufspreizkontrolleinrichtung nicht nur die Position der Aufspreizbereiche der Spreizeinrichtung, sondern auch deren Aufspreizweite und/oder Aufspreizzeitpunkte und/oder Aufspreizreihenfolge variabel kontrolliert werden können, wodurch die Spreizeinrichtung multifunktionale Eigenschaften erhält und die Variationsmöglichkeiten bei der Bearbeitung von Werkstücken zusätzlich erhöht wird.

Weitere vorteilhafte Ausgestaltungsmerkmale der erfindungsgemäßen Vorrichtung sind Gegenstand der Unteransprüche.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Querschnittsansicht eines mittels der erfindungsgemäßen Vorrichtung durch Bruchtrennen abzutrennenden ringartigen Werkstückabschnitts eines Werkstücks,
- Fig. 2: eine schematische Querschnittsansicht durch eine Spreizeinrichtung einer erfindungsgemäßen Vorrichtung gemäß einer ersten Ausführungsform,
- Fig. 3: eine schematische Frontalansicht der Spreizeinrichtung von Fig. 2,
- Fig. 4: eine schematische Querschnittsansicht durch einen wesentlichen Teilbereich einer Spreizeinrichtung einer erfindungsgemäßen Vorrichtung gemäß einer zweiten Ausführungsform,
- Fig. 5: eine schematische Querschnittsansicht durch einen wesentlichen Teilbereich einer Spreizeinrichtung einer erfindungsgemäßen Vorrichtung gemäß einer dritten Ausführungsform, und
- Fig. 6: eine schematische, stark vereinfachte Prinzipskizze eines wesentlichen Teilbereichs einer Spreizeinrichtung einer erfindungsgemäßen Vorrichtung gemäß einer vierten Ausführungsform.

### BESCHREIBUNG VON AUSFÜHRUNGSBEISPIELEN DER ERFINDUNG

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

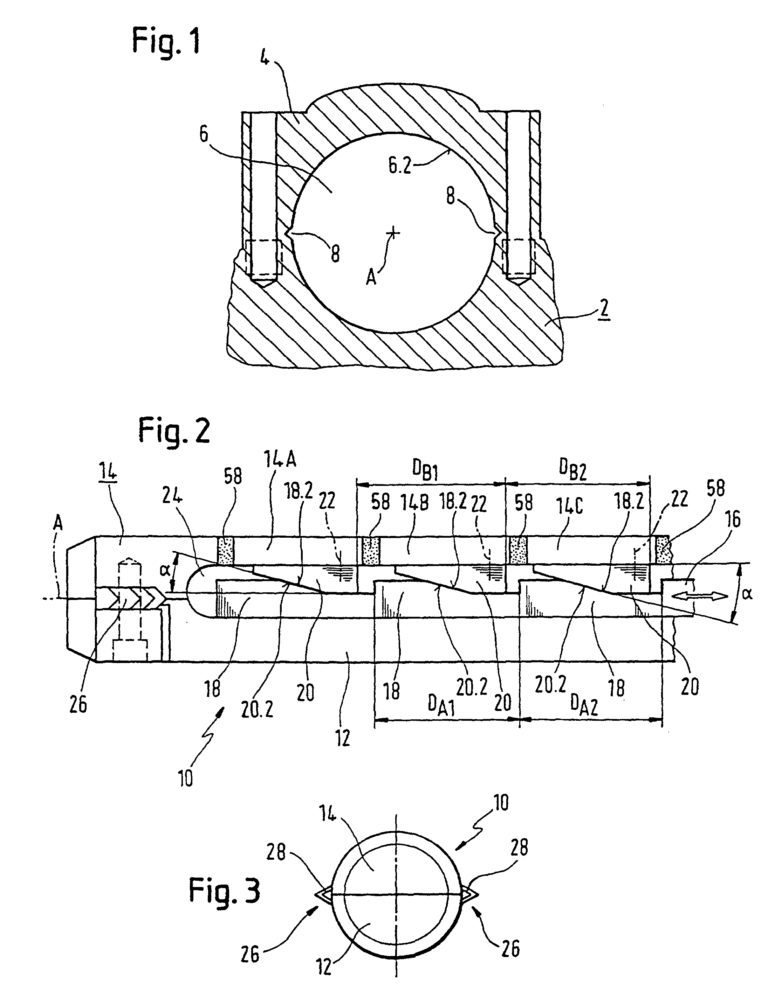

Fig. 1 zeigt in einer schematische Querschnittsansicht einen einzelnen ringartigen Werkstückabschnitt 4 eines Werkstücks 2, an dem mehrere axial fluchtend hintereinander angeordnete ringartige Werkstückabschnitte 4 integral ausgebildet sind. Für die nachfolgend beschriebenen Ausführungsbeispiele wird angenommen, daß es sich bei dem Werkstück um einen Gehäuseblock 2 mit mehreren axial fluchtend hintereinander angeordneten ringartigen Werkstückabschnitten, im nachfolgenden Lagerdeckel 4 genannt, handelt. Die Lagerdeckel 4 können hierbei in Axialrichtung A entweder gleichmäßig oder aber ungleichmäßig voneinander beabstandet sein. Die Lagerdeckel 4 umschließen jeweils eine Bohrung 6, die zur Lagerung einer Kurbelwelle oder dergleichen dient. Diese Lagerdeckel 4 sollen mittels der erfindungsgemäßen Vorrichtung durch Bruchtrennen von dem Gehäuseblock 2 gelöst werden, so daß sich an einer vorbestimmten Bruchebene eine jeweils individuelle Makroverzahnung am Materialgefüge der abgetrennten Lagerdeckel 4 und des verbleibenden Gehäuseblocks 2 ausbildet und eine genau zusammenpassende Paarung zwischen einem jeweiligen Lagerdeckel 4 und seinem zugehörigen Gehäuseblockabschnitt entsteht. Die Bruchebene wird im vorliegenden Fall durch zwei auf einer Innenfläche 6.2 einer jeweiligen Bohrung 6 befindliche Bruchkerben 8 festgelegt, die vor dem eigentlichen Bruchtrennvorgang hergestellt werden.

Die erfindungsgemäße Vorrichtung zum Bruchtrennen dieses Werkstücks 2 umfaßt im vorliegenden Beispiel, wie in der Fig. 2 in einer schematischen Querschnittsansicht gezeigt, eine Spreizeinrichtung, die einen Spreizdorn 10 mit zwei senkrecht zur Axialrichtung A, und damit in Bezug auf die Bohrungen 6 in einer radialen Richtung, relativ zueinander bewegliche Spreizdornhälften 12, 14 besitzt. Die in der Fig. 2 untere Spreizdornhälfte 12 ist hierbei eine feste Spreizdornhälfte, während die in Fig. 2 obere Spreizdornhälfte 14 eine bewegliche Spreizdornhälfte ist. Der Spreizdorn 10 ist in die Bohrungen 6 (vergl. Fig. 1) axial (A) einführbar und im Bereich eines jeweiligen Lagerdeckels 4 mit Hilfe eines der Übersichtlichkeit halber nicht dargestellten Aktuators aufspreizbar. Die jeweiligen Bereiche und/oder Umgebungen des eingeführten Spreizdorns 10, die innerhalb der Bohrungen 6 zu liegen kommen, werden als Aufspreizbereiche bezeichnet. Je nach Art der verwendeten Spreizeinrichtung kann sich ein einzelner Aufspreizbereich jedoch grundsätzlich auch axial über eine jeweilige Bohrung 6 hinaus erstrecken.

Der Spreizdorn 10 umfaßt des Weiteren eine zwischen den Spreizdornhälften 12, 14 angeordnete und mit der beweglichen Spreizdornhälfte 14 zusammenwirkende integrierte Aufspreizkontrolleinrichtung zum Kontrollieren einer variablen Position und/oder einer variablen Aufspreizweite und/oder eines variablen Aufspreizzeitpunktes und/oder einer variablen Aufspreizreihenfolge der Aufspreizbereiche des Spreizdorns 10.

Diese Aufspreizkontrolleinrichtung umfaßt ein in Axialrichtung A zwischen den Spreizdornhälften 12, 14 verlaufendes langgestrecktes Betätigungselement 16, im nachfolgenden Zugstange 16 genannt, deren aus dem Spreizdorn 10 herausragendes Ende mit dem zuvor erwähnten Aktuator koppelbar und mit dessen Hilfe in Axialrichtung bewegbar ist, wie in der Zeichnung durch einen Doppelpfeil angedeutet. Die Zugstange 16 besitzt auf ihrer der beweglichen Spreizdornhälfte 14 zugewandten Längsseite eine Vielzahl von integralen ersten Keilelementen 18 mit sich in Bezug auf die Axialrichtung A winkelig (α) erstreckenden ersten Keilflächen 18.2. Überdies verfügt die Aufspreizkontrolleinrichtung über eine Vielzahl von auf der Innenseite der beweglichen Spreizdornhälfte 14 lösbar befestigten zweiten Keilelementen 20 mit sich in Bezug auf die Axialrichtung A winkelig (α) erstreckenden zweiten Keilflächen 20.2. Die zweiten Keilelemente 20 sind zu den ersten Keilelementen 18 komplementär ausgebildet und diesen zugeordnet. Obwohl die Geometrie und insbesondere der Keilwinkel α der ersten und zweiten Keilelemente 18, 20 im vorliegenden Ausführungsbeispiel gleich sind, können sie jedoch auch unterschiedlich sein, wie nachfolgend noch erläutert werden wird.

Der gegenseitige axiale Abstand D_{B1}, D_{B2}, ... D_{BX} der zweiten Keilelemente 20 ist variabel einstellbar. Zu diesem Zweck sind die zweiten Keilelemente 20 mit Befestigungsmitteln 22 in einer Führungsnut 24 an der Innenseite der beweglichen Spreizdornhälfte 14 lösbar und damit auch einzeln auswechselbar fixiert. Die Befestigungsmitteln 22 sind so ausgelegt, daß sie in jedem Fall die von der Zugstange 16 ausgehende und für den Aufspreizvorgang erforderliche Axialkraft, die sich an einem Keilelementenpaar 18, 20 in eine senkrecht zur Axialrichtung A verlaufende Aufspreizkraft-Teilkomponente aufspaltet, sicher übertragen können. Zu diesem Zweck können die zweiten Keilelemente 20 und/oder die bewegliche Spreizdornhälfte 14 mit zusätzlichen lastübertragenden Elementen oder Widerlagern ausgestattet sein, die in der Zeichnung der Übersichtlichkeit halber jedoch nicht gezeigt sind.

Anstelle oder zusätzlich zu den zweiten Keilelementen 20 der beweglichen Spreizdornhälfte 14 können natürlich auch die ersten Keilelemente 18 und/oder die Zugstange 16 derart ausgestaltet sein, daß der gegenseitige axialer Abstand D_{A1}, D_{A2} ... D_{AX} der ersten Keilelemente 18 auf der Zugstange 16 in analoger oder anderer Weise variabel einstellbar ist.

Nachfolgend wird nun anhand einiger Beispiele die Funktion und Wirkung der Aufspreizkontrolleinrichtung und ihrer unterschiedlichen Varianten erläutert werden. Der Einfachheit halber wird angenommen, daß die ersten und zweiten Keilelemente 18, 20 jeweils gleichartig ausgestaltet sind.

### Beispiel 1:

Gegeben ist ein Gehäuseblock 2 mit gleichartigen, axial gleichmäßig voneinander beabstandeten Lagerdeckeln 4. Die zweiten Keilelemente 20 werden so fixiert, daß ihr gegenseitiger axialer Abstand D_{B1}, D_{B2}, ... D_{BX} jeweils gleich ist und dem gegenseitigen axialen Abstand D_{A1}, D_{A2}... D_{AX} der ersten Keilelemente 18 der Zugstange 16 entspricht. Bei einer Betätigung der Zugstange 16 werden alle Aufspreizbereiche des Spreizdorns 10 gleichzeitig aufgespreizt und alle Lagerdeckel 4 gleichzeitig bruchgetrennt.

### Beispiel 2:

Gegeben ist ein Gehäuseblock 2 mit gleichartigen, axial gleichmäßig voneinander beabstandeten Lagerdeckeln 4. Die Anordnung der ersten Keilelemente 18 ist wie in Beispiel 1. Die zweiten Keilelemente 20 werden so fixiert, daß der gegenseitige axiale Abstand zwischen den aufeinanderfolgenden benachbarten zweiten Keilelementen 20 größer wird: D_{BX} > ..D_{B2} > D_{B1}. Bei einer Betätigung der Zugstange 16 werden die Aufspreizbereiche beginnend von der linken Seite in Fig. 2 nacheinander aufgespreizt und die Lagerdeckel 4 nacheinander bruchgetrennt. Falls D_{B1} > D_{B2} ...> D_{BX}, würde das Aufspreizen und Bruchtrennen dagegen von der rechten Seite in Fig. 2 her beginnen. Diese Varianten sind besonders dann von Vorteil, wenn eine große Anzahl von abzutrennenden Werkstückabschnitten 4 vorliegt und/oder die Bruchtrennkraft gering gehalten werden soll.

Da bei diesem Beispiel die Keilelemente 18, 20 nacheinander zum Eingriff kommen, können Sie in dem jeweils aktivierten Aufspreizbereich (sowie eventuell auch an den daran angrenzenden Aufspreizbereichen), insbesondere, wenn die Aufspreizbereiche in Axialrichtung A eng beieinander liegen, eine gewisse Schrägstellung oder Verkantung der beweglichen Spreizdornhälfte 14 bewirkten, da der Spreizhub unter Umständen einseitig beginnt. Dies würde zu Biegemomenten in dem Spreizdorn führen, was sich nachteilig auswirken könnte. Wie in Fig. 2 angedeutet, ist die bewegliche Spreizdornhälfte 14 daher in beweglich miteinander verbundene Spreizdornhälftenabschnitte 14A, 14B, 14C unterteilt, wobei jeder dieser Spreizdornhälftenabschnitte 14A, 14B, 14C einem jeweils zugehörigen Aufspreizbereich zugeordnet ist. Die Spreizdornhälftenabschnitte 14A, 14B, 14C sind über eine flexible Verbindung 58 und/oder eine Kupplungsverbindung und/oder eine Einfach- und/oder Mehrfachgelenkverbindung oder dergleichen miteinander verbunden, so daß die jeweiligen Aufspreizbereiche unabhängig voneinander aufspreizbar sind und eine Schrägstellung oder ein Verkanten der beweglichen Spreizdornhälfte 14 sowie ein daraus resultierendes unerwünschtes Biegemoment wirkungsvoll vermieden werden kann. Es ist im Sinne der Erfindung denkbar, unter Berücksichtigung von gewissen konstruktiven Änderungen auch die feste Spreizdornhälfte 12 mit entsprechenden Spreizdornhälftenabschnitten auszustatten. Die zuvor erläuterte Ausgestaltungsweise kann grundsätzlich auch bei den Varianten gemäß den nachstehenden Beispielen 3 und 4 Anwendung finden.

### Beispiel 3:

Gegeben ist ein Gehäuseblock 2 mit gleichartigen, axial unterschiedlich voneinander beabstandeten Lagerdeckeln 4. Die ersten Keilelemente 18 auf der Zugstange 16 und die zweiten Keilelemente 20 der beweglichen Spreizdornhälfte 14 werden in ihrer Position so axial versetzt und dann relativ zueinander fixiert, daß sie ähnlich wie in Beispiel 1 miteinander korrespondieren, wobei D_{A1} = D_{B1}, D_{A2} = D_{B2} ... D_{AX} = D_{BX}. Bei Betätigung der Zugstange 16 kann wiederum ein gleichzeitiges Aufspreizen und Bruchtrennen der Lagerdeckel 4 erzielt werden. Vergrößert man hingegen den gegenseitigen axialen Abstand zwischen aufeinanderfolgenden benachbarten ersten Keilelementen 18 und/oder aufeinanderfolgenden benachbarten zweiten Keilelementen 20, so kann ähnlich wie in Beispiel 2 wiederum ein aufeinanderfolgendes Aufspreizen und Bruchtrennen realisiert werden.

### Beispiel 4:

Gegeben ist ein Gehäuseblock 2 mit gleichartigen, axial gleichmäßig voneinander beabstandeten Lagerdeckeln 4. Die Abstände D_{A1}, D_{A2}... D_{AX} seien wie in Beispiel 1 fest vorgegeben. Die Abstände zwischen den zweiten Keilelementen ist unterschiedlich eingestellt: D_{B1} ≠ ..D_{B2} ≠ D_{BX}. Bei Betätigung der Zugstange 16 wird eine unterschiedliche, aber durch die Wahl der Abstände D_{B1}, D_{B2}... D_{BX} genau festlegbare Reihenfolge beim Aufspreizen und Bruchtrennen der jeweiligen Lagerdeckel 4 erzielt.

Es ist ersichtlich, daß die zuvor beschriebenen Beispiele 1 bis 4 in vielfältiger Weise abgeändert und/oder kombiniert werden können. Werden für einen oder mehrere Aufspreizbereiche jeweils einander zugeordnete erste und zweite Keilelementenpaare 18, 20 verwendet, die sich hinsichtlich ihrer Geometrie, insbesondere ihrer Keilwinkel α, von der Geometrie der anderen Keilelementenpaare der Spreizeinrichtung unterscheiden, so kann beispielsweise auch die jeweilige Aufspreizweite und die Aufspreizkraft eines oder mehrerer Aufspreizbereiche individuell eingestellt werden. Dies ist besonders bei Werkstücken mit unterschiedlich geformten oder unterschiedlich dimensionierten ringartigen Werkstückabschnitten von Vorteil.

Durch ihre integrierte Aufspreizkontrolleinrichtung ermöglicht es die zuvor beschriebene Spreizeinrichtung also auf multifunktionale Art und Weise eine variable Position und/oder eine variable Aufspreizweite und/oder einen variablen Aufspreizzeitpunkt und/oder eine variable Aufspreizreihenfolge und/oder eine variable Aufspreizkraft der Aufspreizbereiche einfach und zuverlässig zu kontrollieren.

Fig. 3 zeigt eine schematische Frontalansicht der Spreizeinrichtung von Fig. 2. Wie aus den Fig. 2 und 3 ersichtlich, ist der Spreizdorn 10 an einem bezogen auf die axiale Einführrichtung A vorderen Abschnitt mit einer als Räumeinrichtung 26 ausgebildeten Trenneinrichtung zum Herstellen von jeweils zwei Bruchkerben 8, 8 in einer jeweiligen Bohrung 6 (vergl. Fig. 1) während des Einführens der Spreizeinrichtung 10 ausgestattet.
Diese Trenn- bzw. Räumeinrichtung 26 ist nicht mit den für das eigentliche Bruchtrennen des Werkstücks 2 vorgesehenen Mitteln zu verwechseln; sie hat im vorliegenden Fall eine ausschließlich spanabhebende, formgebende Funktion zur Bearbeitung der Innenflächen 6.2 der Bohrungen 6. Wie besonders gut in Fig. 3 erkennbar ist, besitzt die Räumeinrichtung 26 zwei einander diametral gegenüberliegende Räumwerkzeuge 28, deren Schneiden leicht radial über den Außenumfang des Spreizdorn 10 überstehen. Während des Einführens des Spreizdorns 10 in die Bohrungen 6 des Gehäuseblocks 2 werden folglich jeweils zwei diametral gegenüberliegende Bruchkerben 8, 8 in der inneren Umfangsfläche 6.2 einer jeweiligen Bohrung 6 ausgeräumt (vergl. Fig. 1). Wenn der Spreizdorn 10 beim Einführvorgang weiter in axialer Richtung A durch die Bohrungen 6 voranschreitet, werden in einer Bohrung 6 nach der anderen die Bruchkerben 8, 8 hergestellt, bis alle Bohrungen 6 des Gehäuseblocks 2 mit den jeweils zwei Bruchkerben 8, 8 versehen sind. Im vollständig eingeführten Zustand ragt das mit den Räumwerkzeugen 28 versehene Ende des Spreizdorns 10 aus der zuletzt geräumten Bohrung 6 heraus, so daß die Räumwerkzeuge 28 beim nachfolgenden Bruchtrennvorgang den Spreizdorn 10 nicht behindern. Nach dem Bruchtrennen kann der Spreizdorn 10 infolge der abgetrennten Lagerdeckel 4 sowie der üblicherweise in Verbindung mit dem Werkstück 2 verwendeten verstellbaren Werkstückhalterungen, die hier nicht näher beschrieben werden sollen, trotz der Räumwerkzeuge 28 wieder leicht aus dem Werkstück 2 entfernt werden.

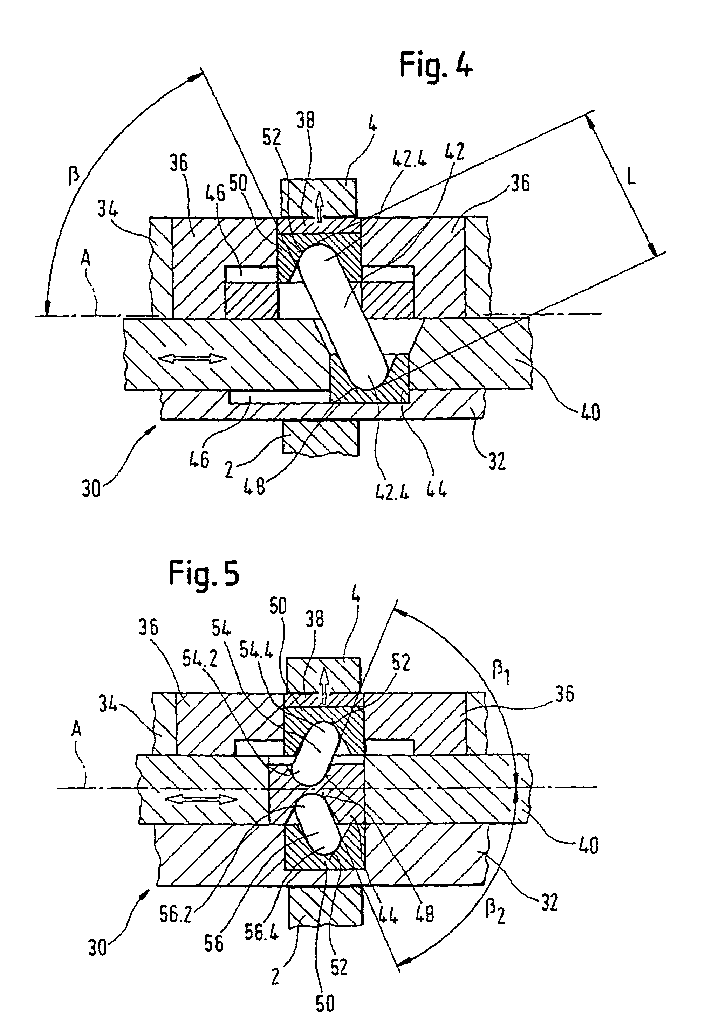

Fig. 4 zeigt eine schematische Querschnittsansicht durch einen wesentlichen Teilbereich einer Spreizeinrichtung einer erfindungsgemäßen Vorrichtung gemäß einer zweiten Ausführungsform. Die Spreizeinrichtung umfaßt einen Spreizdorn 30, von dem in der Figur ausschnittsweise die Umgebung eines einzelnen Aufspreizbereiches dargestellt ist. Der Spreizdorn 30 besitzt wiederum zwei Spreizdornhälften 32, 34. Die erste Spreizdornhälfte 32 ist in ihrer Längserstreckung durchgehend ausgebildet. Die zweite Spreizdornhälfte 34 besitzt in Axialrichtung A voneinander beabstandete Führungsstücke 36, die an der ersten Spreizdornhälfte 32 fixiert sind. Zwischen benachbarten Führungsstücken 36 ist jeweils ein in seiner Außenkontur im wesentlichen halbkreisförmiges, bewegliches Brechsegment 38 eingefügt, wobei ein jeweiliges Brechsegment 38 hinsichtlich seiner Anordnung und Funktion einem jeweiligen Lagerdeckel 4 des durch Bruchtrennen zu bearbeitenden Gehäuseblocks 2 zugeordnet ist. Die Anzahl der Brechsegmente 38 entspricht der Anzahl der abzutrennenden Lagerdeckel 4. Die Brechsegmente 38 sind mittels eines zwischen den beiden Brechdornhälften 32, 34 außermittig verlaufenden und in Axialrichtung A beweglichen langgestreckten Brechsegment-Betätigungselementes 40 relativ zu der ersten Spreizdornhälfte 32 senkrecht zur Lagerachse A (und damit bezogen of die Bohrung 6 in einer radialen Richtung) ausfahrbar. Mittels eines Brechsegmentes 38 kann somit die Aufspreizwirkung des Spreizdorns 30 an einem jeweiligen Lagerdeckel 4 (in der Figur ebenfalls eingezeichnet) erzielt und eine Brechkraft ausgeübt werden.

Der Spreizdorn 30 von Fig. 4 ist mit einer Aufspreizkontrolleinrichtung ausgestattet, die mit den Brechsegmenten 38 zusammenwirkt. Die Aufspreizkontrolleinrichtung umfaßt eine Vielzahl von in Axialrichtung A voneinander beabstandeten Hebelelementen 42, nachfolgend kurz Hebel 42 genannt, die jeweils in einem durch ein jeweiliges Brechsegment 38 festgelegten Aufspreizbereich zwischen den beiden Spreizdornhälften 32, 34 angeordnet sind und sich in einem stumpfen Winkel β quer zur Axialrichtung A erstrecken. Jedem Aufspreizbereich ist hier also ein Hebel 42 zugeordnet. Da die Komponenten der Aufspreizkontrolleinrichtung im vorliegenden Fall für jeden Aufspreizbereich gleich sind, wird nachfolgend nur ein einzelner Aufspreizbereich betrachtet werden. Eine weiteres Teilelement der Aufspreizkontrolleinrichtung bildet das bereits zuvor erwähnte, in Axialrichtung A zwischen den beiden Spreizdornhälften 32, 34 verlaufende Brechsegment-Betätigungselement 40, im nachfolgenden kurz Betätigungselement 40 genannt. Es ist im vorliegenden Fall indirekt mit einem Endbereich eines jeweiligen Hebels 42, d.h. in der Fig. 4 mit dem unteren Ende 42.2 des gezeigten Hebels 42, verbunden und wirkt mit diesem zusammen. Die indirekte Verbindung erfolgt über ein mit dem Betätigungselement 40 verbundenes Gleitstück 44, daß an dem Betätigungselement 40 fixiert ist und zusammen mit diesem in einem sich axial über den Aufspreizbereich hinaus erstreckenden Hohlraum 46 beweglich geführt ist. Das Gleitstück 44 besitzt eine Hebelendaufnahme 48, in der das untere Hebelende 42.2 gelenkartig aufgenommen ist.

Die Aufspreizkontrolleinrichtung umfaßt ferner jeweils ein in einem jeweiligen Aufspreizbereich, das heißt hier im Bereich eines jeweiligen Brechsegmentes 38, angeordnetes und mit diesem in direkter Wirkverbindung stehendes Hebel-Widerlager 50. Das Hebel-Widerlager ist als sog. Druckstück 50 ausgebildet, das auf seiner zum Hohlraum 46 weisenden Seite mit einer Hebelendaufnahme 52 versehen ist, die der Hebelendaufnahme 48 des Gleitstücks 44 ähnelt. In der Hebelendaufnahme 52 des Druckstücks 50 ist das andere Ende 42.4 des Hebels 42 (in der Fig. 4 das obere Ende) gelenkartig aufgenommen. In axialer Richtung A ist das Druckstück 50 zwischen zwei benachbarten Führungsstücken 36 gesichert, die auch ein jeweiliges Brechsegment 38 zwischen sich aufnehmen. In einer im wesentlichen senkrecht zur Axialrichtung A verlaufenden Richtung ist das Druckstück 50 jedoch entsprechend dem Brechsegment 38 beweglich. Die dem Hohlraum 46 abgewandte Seite des Druckstückes 50 stützt sich hierbei auf der zum Hohlraum 46 weisenden Innenseite des Brechsegmentes 38 ab.

Bei einer axialen Bewegung des Betätigungselementes 40 in einer in der Fig. 4 nach links gerichteten Richtung, wird das untere Hebelende 42.2 über das Gleitstück 44 von dem Betätigungselement 40 mitgenommen und aufgrund der stumpfwinkeligen Anordnung β des Hebels 42 in Bezug auf die Axialrichtung A und infolge der Abstützung des oberen Hebelendes 42.4 in dem Druckstück 50 eine starke Übersetzung mit einer senkrecht zur Axialrichtung A gerichteten Brechkraftkomponente erzielt, welche das Brechsegment 38 über das Druckstück 50 nach außen drückt und somit eine Aufspreizwirkung erzielt. Dieser Vorgang verläuft an den anderen Hebeln 42 und Brechsegmenten 38 des Spreizdorns 30 analog ab.

Die Anordnung eines jeweiligen Hebels 42 der Aufspreizkontrolleinrichtung, insbesondere aber die Größe des stumpfen Winkels β, ist entweder fest vorgegeben oder aber individuell einstellbar. Eine Einstellbarkeit kann im Sinne der Erfindung durch unterschiedliche Vorrichtungsmerkmale gewährleistet werden, die in der Mehrzahl in der Fig. 4 erkennbar sind. So kann die Winkelstellung β des Hebels 42 beispielsweise durch den in Axialrichtung A gemessenen Versatz der Hebelendaufnahmen 48, 52, der axialen und/oder vertikalen Abmessung bzw. Anordnung des Gleitstücks 44 und/oder des Druckstücks 50 und/oder der axialen und/oder vertikalen Position und/oder Ausgestaltung der Gleitstück/Betätigungselementverbindung bzw. allgemein durch die axiale und/oder vertikale Position der Hebelgelenke bzw. der Hebelangriffspunkte beeinflußt werden. Sogar die Länge L des Hebels 42 wird, eine ausreichende axiale Beweglichkeit des Betätigungselementes 40 bzw. des Gleitstückes 44 vorausgesetzt, bei anderen fest vorgegebenen Vorrichtungsdimensionen die Winkelstellung β beeinflussen. So wird ein längerer Hebel 42 in einem nicht aufgespreizten Ausgangszustand des Spreizdorns 30 einen kleinere Winkel β und ein kürzerer Hebel 42 einen größeren Winkel β besitzen. Je nach Anordnung und Ausgestaltung des Hebels 42, des Gleitstücks 44, des Druckstücks 50 bzw. des Betätigungselementes 40 oder etwaiger zwischengeschalteter Zusatzkomponenten kann also das Aufspreizverhalten des Spreizdorns 30 gezielt kontrolliert werden.

Dies wird anhand folgender Beispiele verdeutlicht. Die Anordnung und Ausbildung des Betätigungselementes 40, des Gleitstücks 44, des Druckstücks 50, der Brechsegmente 38 und der Führungsstücke 36 sei in jedem Fall gleich. Zu bearbeiten sei ein Gehäuseblock 2 mit einer den Brechsegmenten 38 des Spreizdorns 30 entsprechenden Anzahl und Anordnung von gleichartigen Lagerdeckeln 4.

### Beispiel 5:

Die Länge L der Hebel 42 ist für alle Aufspreizbereiche gleich. Folglich ist auch der Stumpfe Winkel β für alle Hebel 42 gleich. Bei einer Aktivierung des Betätigungselementes 40 werden folglich alle Brechsegmente 38 gleichzeitig und hinsichtlich ihrer Aufspreizweite bzw. ihres Spreizhubs gleichmäßig ausfahren, jeweils eine im wesentlichen gleichgroße Aufspreizkraft auf die Lagerdeckel 4 ausüben und eine gleichzeitige Bruchtrennung aller Lagerdeckel 4 bewirken.

### Beispiel 6:

Die Länge L der Hebel 42 ist unterschiedlich und wird ausgehend von dem freien Ende des Spreizdorns 30 und bezogen auf jeweils benachbarte Aufspreizbereiche gleichmäßig länger. Folglich wird der jeweilige stumpfe Winkel β der Hebel 42 ausgehend von dem freien Ende immer kleiner. Bei einer Aktivierung des Betätigungselementes 40 werden daher die Brechsegmente 38 ausgehend von dem freien Ende nacheinander ausfahren und die Lagerdeckel 4 nacheinander bruchtrennen. Der erste Bruch erfolgt hierbei an dem Hebel mit dem in der Ausgangsposition größten stumpfen Winkel β, da dieser als erster die erforderliche Bruchkraft aufbringt (das Erreichen eines hinreichenden Spreizhubs wird vorausgesetzt).

### Beispiel 7:

Die Länge L der Hebel 42 und ihre Winkelanordnung und Winkelverteilung über den gesamten Spreizdorn 30 hinweg sind für jedes Brechsegment 38 unterschiedlich. Bei einer Aktivierung des Betätigungselementes 40 werden die Brechsegmente 38 beginnend bei dem kürzesten Hebel (mit dem größten stumpfen Winkel β; das Erreichen eines hinreichenden Spreizhubs wird vorausgesetzt) in unterschiedlicher, aber durch die jeweiligen Winkel β genau festlegbaren Reihenfolge ausgefahren und folglich die Lagerdeckel 4 in einer unterschiedlichen, aber festgelegten Reihenfolge bruchtrennen.

Es ist ersichtlich, daß die zuvor beschriebenen Beispiele 5 bis 7 in vielfältiger Weise abgeändert und/oder kombiniert werden können. Es wird darauf hingewiesen, daß sich die in den Beispielen 6 und 7 beschriebenen Ergebnisse selbstverständlich auch mit Hebeln 42 gleicher Länge L erzielen lassen, wobei jedoch die jeweilige Winkelstellung β der Hebel 42 für das Aufspreizkontrollverhalten wesentlich ist; Bei jeweils gleicher Hebellänge L könnte eine unterschiedliche Winkelstellung β beispielsweise durch Gleitstücke 44 mit unterschiedlichen axialen Längen und/oder vertikalen Abmessungen oder durch unterschiedlich voneinander beabstandete axiale und/oder vertikale Angriffspunkte der Gleitstücke 44 an dem Betätigungselement 40 und dergleichen erreicht werden.

Fig. 5 zeigt eine schematische Querschnittsansicht durch eine Spreizeinrichtung einer erfindungsgemäßen Vorrichtung gemäß einer dritten Ausführungsform. Die Aufspreizkontrolleinrichtung dieser Variante verwendet ebenfalls das in Fig. 4 dargestellte Konstruktionsprinzip. Davon abweichend verläuft das Betätigungselement 40 jedoch im wesentlichen mittig in dem Spreizdorn 30. Des weiteren sind jedem Aufspreizbereich, d.h. hier jedem Brechsegment 38, jeweils zwei Hebel 54, 56 zugeordnet sind, die bezogen auf die in Axialrichtung A verlaufende Mittellinie des Spreizdorns 30 spiegelverkehrt zueinander angeordnet sind und ein Hebelpaar bilden, zwischen dem das Betätigungselement 40 verläuft. Die stumpfen Winkel β₁, β₂ der Hebel 54, 56 sind im vorliegenden Beispiel gleich groß. Es sind jedoch auch Anwendungen denkbar, bei denen die stumpfen Winkel β1, β2 voneinander verschieden sind.

Die zu dem Betätigungselement 40 weisenden Enden 54.2, 56.2 des Hebelpaares 54, 56 sind über ein am Betätigungselement 40 fixiertes Gleitstück 44, das zwei einander gegenüberliegende seitliche Hebelendaufnahmen 48, 48 besitzt und mit dem Betätigungselement 40 axial mitbewegbar ist, indirekt mit dem Betätigungselement 40 verbunden und wirken mit diesem zusammen. Die anderen Enden 54.4, 56.4 der beiden Hebel 54, 56 stützen sich jeweils in einem einer jeweiligen Spreizdornhälfte 32, 34 zugeordneten Druckstück 50, 50 ab, wobei das in der Fig. 5 untere Druckstück 50, wie in der Ausführungsform von Fig. 4, wiederum mit dem Brechsegment 38 zusammenwirkt.

Mit der in Fig. 5 gezeigten Aufspreizkontrolleinrichtung sind ebenfalls die bereits in Zusammenhang mit der Fig. 4 beschriebenen Effekte und Kontrollmöglichkeiten erzielbar. Gegenüber der Variante von Fig. 4 ermöglicht das Ausführungsbeispiel gemäß Fig. 4 jedoch noch geringere axiale Abmessungen sowie aufgrund der Hebelpaaranordnung mit ihren Winkeln β1, β2 eine größere Anzahl von Variationsmöglichkeiten.

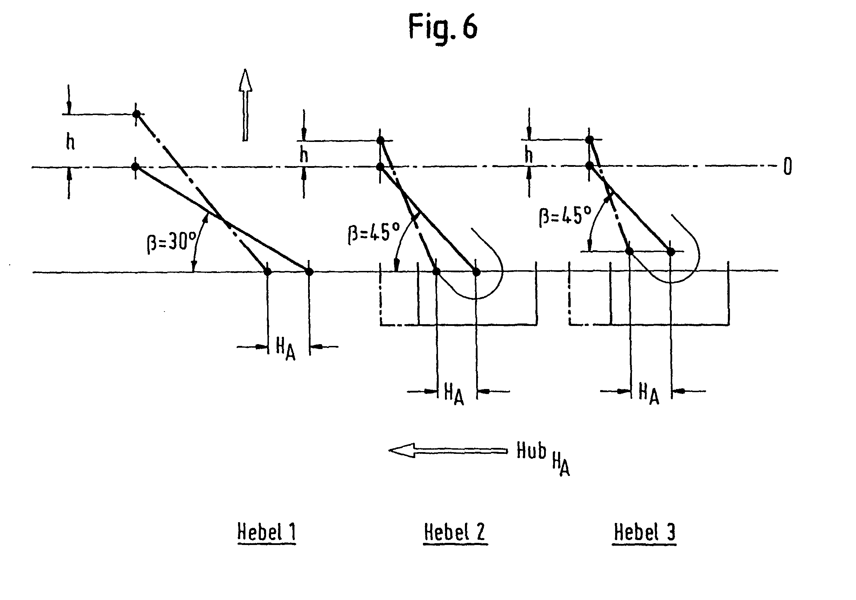

Fig. 6 zeigt eine schematische, stark vereinfachte Prinzipskizze eines wesentlichen Teilbereichs einer Spreizeinrichtung einer erfindungsgemäßen Vorrichtung gemäß einer vierten Ausführungsform. Diese Variante ähnelt von ihrer Grundkonstruktion her der Ausführungsform nach Fig. 4 und verdeutlicht einen Fall, bei dem die Dimensionen der verwendeten Vorrichtungskomponenten, d.h. hier die Längen der Hebel (Hebel 1, Hebel 2 und Hebel 3) sowie z.B. die Anordnung und Abmessung der Druckstücke und damit auch die Lage der Hebelgelenkpunkte bezogen auf eine Ausgangslage für jeden Aufspreizbereich unterschiedlich sind. In der unbetätigten Ausgangslage liegen die oberen Endpunkte aller drei Hebel auf einer gemeinsamen vertikalen Höhe, die in der Fig. 6 durch eine Linie "0" angedeutet ist. Dieses Beispiel zeigt gut, daß bei einer bestimmten Konstruktionsweise die Länge des Hebels nicht zwangsweise den Winkel β beeinflussen muß. Hebel 3 ist kürzer als Hebel 2, hat aber den gleichen Winkel β (hier: 45°). Grundsätzlich können in der Variante nach Fig. 4 bei einem für alle Hebel gleichen Hub H_{A} des Brechsegment-Betätigungselementes in Axialrichtung verschiedene Spreizhübe h erreicht werden, wie in der Zeichnung angedeutet. In der Regel wird es aber erwünscht sein, daß der Spreizhub h an jeder Stelle bzw. an jedem Brechsegment gleich groß ist, da dies eine einfachere Vorrichtungskonstruktion erlaubt. Ein gewünschter zeitlicher Spreiz- und Bruchbeginn bzw. ein unterschiedlicher Kraftaufbau bei gleichem Hub H_{A} kann dann durch eine entsprechende Auslegung von Hebellänge und entsprechendem Winkel β erreicht werden. Die oberen Enden der Hebel bzw. die zugehörigen oberen Hebelgelenkpunkte können hierbei z.B. in einer Ausgangslage auf einer gemeinsamen Höhe liegen (hier: Linie "0"), während die jeweiligen unteren Hebelenden bzw. die zugehörigen unteren Hebelgelenkpunkte an unterschiedlichen Positionen liegen können (vergleiche Hebel 2 und Hebel 3). Eine entsprechende Konfiguration könnte beispielsweise auch analog für das oben geschilderte Beispiel 7 verwendet werden.

Die Erfindung ist nicht auf die obigen Ausführungsbeispiele, die lediglich der allgemeinen Erläuterung des Kerngedankens der Erfindung dienen, beschränkt. Im Rahmen des Schutzumfangs kann die erfindungsgemäße Vorrichtung vielmehr auch andere als die oben beschriebenen Ausgestaltungsformen annehmen. Die Keilelemente 18, 20 der Aufspreizkontrolleinrichtung von Fig. 2 können auch zu größeren Einheiten zusammengefaßt sein. Ferner ist es möglich, die Keilelemente 18 auf beiden Seiten des langgestreckten Betätigungselementes 16 und die Keilelemente 20 auf beiden Spreizdornhälften 12, 14 vorzusehen. Im Falle der Verwendung von Brechsegmenten können Keilflächen auch auf der Innenseite der Brechsegmente angeordnet sein. Bei den Varianten nach Fig. 4 und 5 können die Hebelarme 42, 54, 56 grundsätzlich auch direkt, zum Beispiel über eine Gelenkverbindung mit dem Betätigungselement 40 bzw. dem Brechsegment 38 verbunden sein. Dies ist jedoch nur bei geringeren Brechkräften bzw. einer sehr stabilen Dimensionierung der einzelnen Bauteile und Gelenke sinnvoll. Bei Bedarf können pro Aufspreizbereich auch mehrere Einzelhebel, zum Beispiel in einer Parallelhebelanordnung, oder mehrere Hebelpaare oder komplexere Hebelmechanismen vorgesehen sein. Auch kann die Hebelgeometrie und -anordnung von den obigen Beispielen abweichen. Anstelle eines einzelnen Betätigungselementes 16, 40 sind auch mehrere Betätigungselemente denkbar, welche die Komponenten der Aufspreizkontrolleinrichtung bzw. der Spreizelemente einzeln und/oder in Gruppen betätigen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Werkstück / Gehäuseblock
- 4: Ringartige Werkstückabschnitte / Lagerdeckel
- 6: Bohrung in 4
- 6.2: Innenfläche von 6
- 8: Bruchkerben
- 10: Spreizdorn
- 12: Spreizdornhälfte von 10
- 14: Spreizdornhälfte (bewegliche -) von 10
- 14A: Spreizdornhälftenabschnitt
- 14B: Spreizdornhälftenabschnitt
- 14C: Spreizdornhälftenabschnitt
- 16: Betätigungselement / Zugstange
- 18: Erste Keilelemente
- 18.2: Erste Keilflächen
- 20: Zweite Keilelemente
- 20.2: Zweite Keilflächen
- 22: Befestigungsmittel
- 24: Führungsnut in 14
- 26: Trenneinrichtung / Räumeinrichtung
- 28: Räumwerkzeuge von 26
- 30: Spreizdorn
- 32: Erste Spreizdornhälfte von 30
- 34: Zweite Spreizdornhälfte von 30
- 36: Führungsstücke
- 38: Brechsegmente von 30
- 40: Brechsegment-Betätigungselement von 30
- 42: Hebelelemente / Hebel
- 42.2: Oberes Ende von 42
- 42.4: Unteres Ende von 42
- 44: Gleitstück
- 46: Hohlraum
- 48: Hebelendaufnahme von 44
- 50: Hebel-Widerlager / Druckstück
- 52: Hebelendaufnahme von 50
- 54: Hebel
- 56: Hebel
- 58: flexible bzw. bewegliche Verbindung

- α: Keilwinkel
- β₁: Stumpfer Winkel
- β₂: Stumpfer Winkel

- A: Axialrichtung
- h: Spreizhub eines Hebels bzw. eines Brechsegmentes
- H_{A}: Hub von 40 in Axialrichtung

## Patentansprüche

1. Vorrichtung zum Bruchtrennen eines Werkstücks (2) mit mehreren axial fluchtend hintereinander angeordneten ringartigen Werkstückabschnitten (4), mit mindestens einer Spreizeinrichtung (10, 30), die in eine durch einen jeweiligen ringartigen Werkstückabschnitt (4) gebildete Bohrung (6) axial (A) einführbar ist und mindestens ein Spreizelement (14, 38) aufweist dass an mindestens zwei, in Axialrichtung (A) voneinander beabstandeten Aufspreizbereichen aufspreizbar ist,
**dadurch gekennzeichnet, dass**
die Spreizeinrichtung (10, 30) mit einer mit dem mindestens einen Spreizelement (14, 38) zusammenwirkenden integrierten Aufspreizkontrolleinrichtung (16, 18, 20, 22; 40, 42, 44, 46, 48, 50, 52; α; β; β1; β2) versehen ist und diese integrierte Aufspreizkontrolleinrichtung ausgewählt ist aus einer Gruppe von integrierten Aufspreizkontrolleinrichtungen umfassend:
- eine integrierte Aufspreizkontrolleinrichtung zum Kontrollieren einer variablen Position der mindestens zwei Aufspreizbereiche,
- einer integrierten Aufspreizkontrolleinrichtung zum Kontrollieren einer variablen Aufspreizweite der mindestens zwei Aufspreizbereiche,
- einer integrierten Aufspreizkontrolleinrichtung zum Kontrollieren eines variablen Aufspreizzeitpunktes der mindestens zwei Aufspreizbereiche,
- einer integrierten Aufspreizkontrolleinrichtung zum Kontrollieren einer variablen Aufspreizreihenfolge der mindestens zwei Aufspreizbereiche,
- einer integrierten Aufspreizkontrolleinrichtung, die eine Kombination aus zwei oder mehreren der zuvor genannten integrierten Aufspreizkontrolleinrichtungen darstellt.

2. Vorrichtung nach Anspruch 1,
**dadurch gekennzeichnet, dass**
die Spreizeinrichtung wenigstens einen Spreizdorn (10, 30) mit zwei Spreizdornhälften (12, 14; 32, 34) besitzt, von denen zumindest eine über die in Axialrichtung (A) voneinander beabstandeten Aufspreizbereiche (38) verfügt, und dass die Aufspreizkontrolleinrichtung (16, 18, 20, 22; 40, 42, 44, 46, 48,50, 52; α; β; β₁, β₂) zwischen den Spreizdornhälften (12, 14; 32, 34) angeordnet ist.

3. Vorrichtung nach Anspruch 2,
**dadurch gekennzeichnet, dass**
die Aufspreizkontrolleinrichtung umfaßt:
- mindestens ein in Axialrichtung (A) zwischen den beiden Spreizdornhälften (12, 14) verlaufendes langgestrecktes Betätigungselement (16), das eine Vielzahl von Keilelementen (18) mit sich in Bezug auf die Axialrichtung (A) winkelig (α) erstreckenden ersten Keilflächen (18.2) besitzt, und
- eine Vielzahl von an mindestens einer (14) der beiden Spreizdornhälften (12, 14) befestigten zweiten Keilelementen (20) mit sich in Bezug auf die Axialrichtung (A) winkelig (α) erstreckenden zweiten Keilflächen (20.2),
- wobei die zweiten Keilelemente (20) den ersten Keilelementen (18) komplementär zugeordnet sind und bei einer Betätigung des Betätigungselementes (16) jeweils in Zusammenwirkung mit einem zugeordneten ersten Keilelement (18) das Aufspreizen eines jeweiligen Aufspreizbereiches bewirken, und
- wobei der gegenseitige axiale Abstand (D_{A1}, D_{A2}... D_{AX}) der ersten Keilelemente (18) und/oder der gegenseitige axiale Abstand (D_{B1}, D_{B2}... D_{BX}) der zweiten Keilelemente (20 variabel einstellbar (22) ist.

4. Vorrichtung nach Anspruch 3,
**dadurch gekennzeichnet, dass**
sich der gegenseitige axiale Abstand (D_{A1}, D_{A2}... D_{AX}) zwischen aufeinanderfolgenden benachbarten ersten Keilelementen (18)
und/oder
der gegenseitige axiale Abstand (D_{B1}, D_{B2}... D_{BX}) zwischen aufeinanderfolgenden benachbarten zweiten Keilelementen (20) vergrößert.

5. Vorrichtung nach Anspruch 3 oder 4,
**dadurch gekennzeichnet, dass**
die Keilelemente (18, 20) auswechselbar (22) sind.

6. Vorrichtung nach Anspruch 3, 4 oder 5,
**dadurch gekennzeichnet, dass**
zumindest eine (14) der Spreizdornhälften (12, 14) in beweglich miteinander verbundene (58) Spreizdornhälftenabschnitte (14A, 14B, 14C) unterteilt ist, wobei jeder dieser Spreizdornhälftenabschnitte(14A, 14B, 14C) einem jeweils zugehörigen Aufspreizbereich zugeordnet ist, so dass die jeweiligen Aufspreizbereiche unabhängig voneinander aufspreizbar sind.

7. Vorrichtung nach Anspruch 6,
**dadurch gekennzeichnet, dass**
die bewegliche Verbindung der Spreizdornhälftenabschnitte (14A, 14B, 14C) eine Kupplungsverbindung und/oder eine flexible Verbindung (58) und/oder eine Einfach- und/oder Mehrfachgelenkverbindung ist.

8. Vorrichtung nach Anspruch 2,
**dadurch gekennzeichnet, dass**
die Aufspreizkontrolleinrichtung umfaßt:
- eine Vielzahl von in Axialrichtung (A) voneinander beabstandeten Hebelelementen (42; 54, 56), die jeweils in einem Aufspreizbereich (38) zwischen den beiden Spreizdornhälften (32, 34) angeordnet sind, sich in einem stumpfen Winkel (β; β₁, β₂) quer zur Axialrichtung (A) erstrecken und jeweils mit dem mindestens einen Spreizelement (38) zusammenwirken,
- mindestens ein in Axialrichtung (A) zwischen den beiden Spreizdornhälften (32, 34) verlaufendes Betätigungselement (40), das direkt und/oder indirekt (44) mit einem ersten Endbereich (42.2) eines jeweiligen Hebelelementes (42) verbunden ist und mit diesem zusammenwirkt, und
- mindestens ein in einem jeweiligen Aufspreizbereich (38) angeordnetes und mit diesem in direkter und/oder indirekter Wirkverbindung stehendes Hebelelement-Widerlager (50), das direkt und/oder indirekt mit einem zweiten Endbereich (42.4) eines jeweiligen Hebelelementes (42) verbunden ist und den zweiten Endbereich (42.4) abstützt.

9. Vorrichtung nach Anspruch 8,
**dadurch gekennzeichnet, dass**
der zweite Endbereich (42.4) eines jeweiligen Hebelelementes (42) in einem im wesentlichen senkrecht zur Axialrichtung (A) beweglichen Druckstück (50) gelagert ist, dass mit dem Spreizelement (38) zusammenwirkt.

10. Vorrichtung nach Anspruch 8 oder 9,
**dadurch gekennzeichnet, dass**
das jedem Aufspreizbereich (38) mindestens ein Hebelelement (42; 54, 56) zugeordnet ist.

11. Vorrichtung nach Anspruch 10,
**dadurch gekennzeichnet, dass**
das jedem Aufspreizbereich (38) jeweils zwei Hebelelemente (54, 56) zugeordnet sind, die bezogen auf die Axialrichtung (A) der Spreizeinrichtung (30) spiegelverkehrt zueinander angeordnet sind und ein Hebelelementenpaar (54, 56) bilden, wobei das Betätigungselement (40) zwischen dem Hebelelementenpaar (54, 56) verläuft und die zu dem Betätigungselement (40) weisenden Endbereiche (54.2, 56.2) des Hebelelementenpaares (54, 56) direkt und/oder indirekt (44) mit dem Betätigungselement (40) verbunden sind und mit diesem zusammenwirken.

12. Vorrichtung nach Anspruch 11,
**dadurch gekennzeichnet, dass**
die dem Betätigungselement abgewandten Endbereiche (54.2, 56.2) des Hebelelementenpaares (54, 56) jeweils in einem Druckstück (50) gelagert sind, von dem zumindest eines im wesentlichen senkrecht zur Axialrichtung (A) beweglich ist und mit dem Spreizelement (38) zusammenwirkt.

13. Vorrichtung nach einem der Ansprüche 8 bis 12,
**dadurch gekennzeichnet, dass**
sich die jeweiligen Hebelelemente (42; 54, 56) in einem stumpfen Winkel (β) zur Axialrichtung erstrecken

14. Vorrichtung nach Anspruch 13,
**dadurch gekennzeichnet, dass**
die Winkelstellung (β, β1, β2) eines jeweiligen Hebelelementes (42; 54, 56) individuell einstellbar ist.

15. Vorrichtung nach einem der Ansprüche 8 bis 14,
**dadurch gekennzeichnet, dass**
die Länge (L) der jeweiligen Hebelelemente (42; 54, 56) gleich ist.

16. Vorrichtung nach einem der Ansprüche 8 bis 15,
**dadurch gekennzeichnet, dass**
die Längen (L) der jeweiligen Hebelelemente (42; 54, 56) unterschiedlich sind.

17. Vorrichtung nach einem oder mehreren der vorhergenannten Ansprüche,
**dadurch gekennzeichnet, dass**
die Spreizeinrichtung (10) an einem bezogen auf die axiale Einführrichtung (A) vorderen Abschnitt mit mindestens einer Trenneinrichtung (26, 28) zum Herstellen von einer oder mehreren Bruchkerben (8) in der Bohrung (6, 6.2) während und/oder nach dem Einführen der Spreizeinrichtung (10) ausgestattet ist.

## Claims

1. Apparatus for the fracture separation of a work piece (2) with several ring-like work piece sections (4) arranged one behind the other in axial alignment, with at least one expanding device (10, 30) which can be introduced axially (A) into a bore (6) formed by a respective ring-like work piece section (4) and comprises at least one expanding element (14, 38) which is expandable in at least two expanding regions spaced apart from each other in the axial direction (A), **characterised in that** the expanding device (10, 30) is provided with an integrated expansion control device (16, 18, 20, 22; 40, 42, 44, 46, 48, 50, 52; ; ; 1; 2) cooperating with the at least one expanding element (14, 38), and this integrated expansion control device is selected from among a group of integrated expansion control devices including:
- an integrated expansion control device for controlling a variable position of the at least two expanding regions,
- an integrated expansion control device for controlling a variable expansion width of the at least two expanding regions,
- an integrated expansion control device for controlling a variable moment of expansion of the at least two expanding regions,
- an integrated expansion control device for controlling a variable sequence of expansion of the at least two expanding regions,
- an integrated expansion control device which presents a combination of two or more of the above-mentioned integrated expansion control devices.

2. Apparatus according to claim 1, **characterised in that** the expanding device has at least one expansion mandrel (10, 30) with two expansion mandrel halves (12, 14; 32, 34) at least one of which has the expanding regions (38) spaced apart from each other in the axial direction (A), and **in that** the expansion control device (16, 18, 20, 22; 40, 42, 44, 46, 48, 50, 52; ; ; ₁; ₂) is arranged between the expansion mandrel halves (12, 14; 32, 34).

3. Apparatus according to claim 2, **characterised in that** the expansion control device includes:
- at least one elongate actuating element (16) which runs in the axial direction (A) between .the two expansion mandrel halves (12, 14) and which has a plurality of wedge elements (18) with first wedge surfaces (18.2) extending at an angle ( ) in relation to the axial direction (A),
and
- a plurality of second wedge elements (20) attached to at least one (14) of the two expansion mandrel halves (12, 14), with second wedge surfaces (20.2) extending at an angle ( ) in relation to the axial direction (A),
- wherein the second wedge elements (20) are assigned to the first wedge elements (18) in complementary fashion and, upon actuation of the actuating element (16), in each case in cooperation with an assigned first wedge element (18) cause expansion of a respective expanding region, and
- wherein the axial distance (D_{A1}, D_{A2} ... D_{AX}) between the first wedge elements (18) and/or the axial distance (D_{B1}, D_{B2}...D_{BX}) between the second wedge elements (20) is variably adjustable (22).

4. Apparatus according to claim 3, **characterised in that** the axial distance (D_{A1}, D_{A2}...D_{AX}) between successive adjacent first wedge elements (18) and/or the axial distance (D_{B1}, D_{B2}...D_{BX}) between successive adjacent second wedge elements (20) increases.

5. Apparatus according to claim 3 or 4, **characterised in that** the wedge elements (18, 20) are exchangeable (22).

6. Apparatus according to claim 3, 4 or 5, **characterised in that** at least one (14) of the expansion mandrel halves (12, 14) is divided into expansion mandrel half sections (14A, 14B, 14C) movably connected to each other (58), wherein each of these expansion mandrel half sections (14A, 14B, 14C) is assigned to a respectively associated expanding region, so that the respective expanding regions are expandable independently of each other.

7. Apparatus according to claim 6, **characterised in that** the movable connection between the expansion mandrel half sections (14A, 14B, 14C) is a coupling connection and/or a flexible connection (58) and/or a single- and/or multiple-hinge connection.

8. Apparatus according to claim 2, **characterised in that** the expansion control device includes:
- a plurality of lever elements (42; 54, 56) spaced apart from each other in the axial direction (A), which are in each case arranged in an expanding region (38) between the two expansion mandrel halves (32, 34), extend at an obtuse angle ( ; ₁, ₂) transversely to the axial direction (A) and in each case cooperate with the at least one expanding element (38),
- at least one actuating element (40) which runs in the axial direction (A) between the two expansion mandrel halves (32, 34) and which is directly and/or indirectly (44) connected to a first end region (42.2) of a respective lever element (42) and cooperates with the latter, and
- ,at least one lever element support (50) which is arranged in a respective expanding region (38) and directly and/or indirectly operatively connected to the latter and which is directly and/or indirectly connected to a second end region (42.4) of a respective lever element (42) and supports the second end region (42.4).

9. Apparatus according to claim 8, **characterised in that** the second end region (42.4) of a respective lever element (42) is mounted in a thrust piece (50) which is movable substantially perpendicularly to the axial direction (A) and which cooperates with the expanding element (38).

10. Apparatus according to claim 8 or 9, **characterised in that** at least one lever element (42; 54, 56) is assigned to each expanding region (38).

11. Apparatus according to claim 10, **characterised in that** assigned to each expanding region (38) are two lever elements (54, 56) which, referred to the axial direction (A) of the expanding device (30), are arranged in inverse symmetry to each other and form a pair of lever elements (54, 56), wherein the actuating element (40) runs between the pair of lever elements (54, 56) and the end regions (54.2, 56.2) of the pair of lever elements (54, 56) facing towards the actuating element (40) are directly and/or indirectly (44) connected to the actuating element (40) and cooperate with the latter.

12. Apparatus according to claim 11, **characterised in that** the end regions (54.2, 56.2) of the pair of lever elements (54, 56) facing away from the actuating element are in each case mounted in a thrust piece (50), of which at least one is movable substantially perpendicularly to the axial direction (A) and cooperates with the expanding element (38).

13. Apparatus according to any of claims 8 to 12, **characterised in that** the respective lever elements (42; 54, 56) extend at an obtuse angle ( ) to the axial direction.

14. Apparatus according to claim 13, **characterised in that** the angular position ( , 1, 2) of a respective lever element (42; 54, 56) is individually adjustable.

15. Apparatus according to any of claims 8 to 14, **characterised in that** the length (L) of the respective lever elements (42; 54, 56) is the same.

16. Apparatus according to any of claims 8 to 15, **characterised in that** the lengths (L) of the respective lever elements (42; 54, 56) are different.

17. Apparatus according to one or more of the preceding claims, **characterised in that** the expanding device (10) on a front section referred to the axial direction (A) of insertion is provided with at least one separating device (26, 28) for making one or more fracture notches (8) in the bore (6, 6.2) during and/or after insertion of the expanding device (10).

## Revendications

1. Dispositif pour la division par rupture d'une pièce (2) comportant plusieurs tronçons (4) placés en anneau l'un derrière l'autre en alignement axial, avec au moins un dispositif d'écartement (10, 30) pouvant être introduit axialement (A) dans un alésage (6) formé par un tronçon annulaire (4) de la pièce et présentant au moins un élément écarteur (14, 38) pouvant être écarté sur au moins deux zones d'écartement séparées l'une de l'autre suivant la direction axiale (A),
**caractérisé en ce que**
le dispositif d'écartement (10, 30) est doté d'un dispositif de contrôle de l'écartement intégré (16, 18, 20, 22 ; 40, 42, 44, 46, 48, 50, 52 ; α ; β ; β1 ; β2) interagissant avec au moins un élément écarteur (14, 38) et **en ce que** ce dispositif de contrôle de l'écartement intégré est choisi dans un groupe de dispositifs de contrôle de l'écartement englobant :
- un dispositif de contrôle de l'écartement intégré destiné au contrôle d'une position variable des deux zones d'écartement au moins,
- un dispositif de contrôle de l'écartement intégré destiné au contrôle d'une amplitude d'écartement variable des deux zones d'écartement au moins,
- un dispositif de contrôle de l'écartement intégré destiné au contrôle d'un instant d'écartement variable des deux zones d'écartement au moins,
- un dispositif de contrôle de l'écartement intégré destiné au contrôle d'un ordre d'écartement variable des deux zones d'écartement au moins,
- un dispositif de contrôle de l'écartement intégré représentant une combinaison de deux ou plus des dispositifs de contrôle de l'écartement intégrés indiqués ci-dessus.

2. Dispositif selon revendication 1,
**caractérisé en ce que**
le dispositif d'écartement possède au moins mandrin d'écartement (10, 30) comportant deux moitiés (12, 14 ; 32, 34) dont au moins une dispose des zones d'écartement (38) distantes l'une de l'autre dans le sens axial (A) et **en ce que** le dispositif de contrôle de l'écartement (16, 18, 20, 22 ; 40, 42, 44, 46, 48, 50, 52 ; α ; β ; β1 ; β2) est placé entre les moitiés du mandrin d'écartement (12, 14 ; 32, 34).

3. Dispositif selon revendication 2,
**caractérisé en ce que**
le dispositif de contrôle de l'écartement comporte :
- au moins un organe de manoeuvre (16) allongé passant entre les deux moitiés du mandrin d'écartement (12, 14), et possédant une pluralité d'éléments de calage (18) ayant des premières surfaces de calage (18.2) formant un angle (α) par rapport à la direction axiale (A) et
- une pluralité de deuxièmes éléments de calage (20) fixés sur au moins une (14) des deux moitiés du mandrin d'écartement (12, 14), ayant des deuxièmes surfaces de calage (20.2) formant un angle (α) par rapport à la direction axiale (A),
- les deuxièmes éléments de calage (20) étant associés par complémentarité aux premiers éléments de calage (18) et entraînant l'écartement d'une zone d'écartement respective lorsqu'on actionne l'organe de manoeuvre (16) en interaction avec un premier élément de calage (18) associé et
- la distance axiale opposée (D_{A1}, D_{A2} ... D_{AX}) des premiers éléments de calage (18) et/ou la distance axiale opposée (D_{B1}, D_{B2} ... D_{BX}) des deuxièmes éléments de calage (20) pouvant être réglée de façon variable (22).

4. Dispositif selon revendication 3,
**caractérisé en ce que**
la distance axiale opposée (D_{A1}, D_{A2} ... D_{AX}) entre des premiers éléments de calage voisins successifs (18)
et/ou
la distance axiale opposée (D_{B1}, D_{B2} ... D_{BX}) entre des deuxièmes éléments de calage voisins successifs (20) s'agrandit.

5. Dispositif selon revendication 3 ou 4,
**caractérisé en ce que**
les éléments de calage (18, 20) sont échangeables (20).

6. Dispositif selon revendication 3, 4 ou 5,
**caractérisé en ce que**
au moins une (14) des moitiés du mandrin d'écartement (12, 14) est divisée en tronçons (14A, 14B, 14C), reliés (58) entre eux de façon mobile, chacun de ces tronçons (14A, 14B, 14C) étant associé à une zone d'écartement correspondante de sorte que les zones d'écartement respectives puissent être écartées indépendamment l'une de l'autre.

7. Dispositif selon revendication 6,
**caractérisé en ce que**
la liaison mobile des tronçons des moitiés du mandrin d'écartement (14A, 14B, 14C) est une liaison par accouplement et/ou une liaison flexible (58) et/ou une liaison mono-articulée et/ou multi-articulée.

8. Dispositif selon revendication 2
**caractérisé en ce que**
- le dispositif de contrôle de l'écartement comprend une pluralité d'éléments de levier (42 ; 54, 56), distants l'un de l'autre suivant la direction axiale (A), qui sont placés entre les deux moitiés du mandrin d'écartement (32, 34), forment un angle obtus (β ; β1, β2) transversalement à la direction axiale (A) et interagissent avec au moins un élément d'écartement (38),
- au moins un organe de manoeuvre (40), s'étendant entre les deux moitiés de mandrin d'écartement (32, 34) suivant la direction axiale (A), qui est relié directement et/ou indirectement (44) avec une première extrémité (42.2) d'un élément de levier (42) et qui interagit avec celle-ci, et
- au moins un contrefort d'élément de levier (50) placé dans une zone d'écartement (38) et en liaison active directe et/ou indirecte avec celle-ci, qui est relié directement et/ou indirectement avec une deuxième extrémité (42.4) d'un élément de levier (42) et qui soutient la deuxième extrémité (42.4).

9. Dispositif selon revendication 8,
**caractérisé en ce que**
la deuxième extrémité (42.4) d'un élément de levier (42) est logée dans un membre de pression (50) mobile de façon sensiblement perpendiculaire par rapport à la direction axiale (A), qui interagit avec l'élément d'écartement (38).

10. Dispositif selon l'une quelconque des revendications 8 ou 9,
**caractérisé en ce que**
au moins un élément de levier (42 ; 54, 56) est associé à chaque zone d'écartement (38).

11. Dispositif selon revendication 10,
**caractérisé en ce que**
deux éléments de levier (54, 56) sont associés à chaque zone d'écartement (38) et sont placés symétriquement l'un par rapport à l'autre par rapport à la direction axiale (A) du dispositif d'écartement (30) et forment une paire d'éléments de levier (54, 56), l'organe de manoeuvre (40) passant entre la paire d'éléments de levier (54, 56) et les extrémités (54.2, 56.2) de la paire d'éléments de levier (54, 56), tournées vers l'organe de manoeuvre étant reliées directement et/ou indirectement (44) avec l'organe de manoeuvre (40) et interagissant avec celui-ci.

12. Dispositif selon revendication 11,
**caractérisé en ce que**
les extrémités (54.2, 56.2) de la paire d'éléments de levier (54, 56), opposées à l'organe de manoeuvre, sont logées chacune dans un membre de pression (50) dont au moins un est mobile de façon sensiblement perpendiculaire à la direction axiale (A) et interagit avec l'élément d'écartement (38).

13. Dispositif selon l'une quelconque des revendications 8 à 12,
**caractérisé en ce que**
les éléments de levier (42 ; 54, 56) forment un angle obtus (β) par rapport à la direction axiale.

14. Dispositif selon revendication 13
**caractérisé en ce que**
la position angulaire (β, β1, β2) d'un élément de levier (42 ; 54, 56) peut être réglée individuellement.

15. Dispositif selon l'une quelconque des revendications 8 à 14,
**caractérisé en ce que**
les éléments de levier (42 ; 54, 56) sont de même longueur (L).

16. Dispositif selon l'une quelconque des revendications 8 à 15,
**caractérisé en ce que**
les éléments de levier (42 ; 54, 56) sont de longueur (L) différente.

17. Dispositif selon l'une ou plusieurs des revendications précédentes,
**caractérisé en ce que**
le dispositif d'écartement (10) est équipé, sur un tronçon antérieur par rapport à la direction d'introduction axiale (A), d'au moins un dispositif de séparation (26, 28) destiné à réaliser une ou plusieurs encoches de rupture (8) dans l'alésage (6, 6.2) pendant et/ou après l'introduction du dispositif d'écartement (10).
